# EUROPEAN PATENT APPLICATION

(11) **EP 4 663 330 A1**
(43) Date of publication of application: **17.12.2025**
(21) Application number: 25179944.1
(22) Date of filing: 30.05.2025
(51) Int. Cl.: B23K 9/133, B23K 9/29, H01R 39/02

(54) **ROTARY TORCH**

(30) Priority: 12.06.2024 JP 2024095232; 08.01.2025 JP 2025002948
(71) Applicant: Sugino Machine Limited, Namerikawa City, Toyama 936-8577 (JP)
(72) Inventor: TSURI, Yosuke, Namerikawa City, Toyama, 9368577 (JP); HAREMAKI, Hiroki, Namerikawa City, Toyama, 9368577 (JP)
(74) Representative: Global IP Europe Patentanwaltskanzlei

(57) **Abstract**

The present application relates to a rotary torch (10). The rotary torch (10) includes: a hollow cylindrical case (47); a hollow cylindrical body (41) rotatably supported by the case (47) in a radially inward of the case (47); a hollow cylindrical wire guide (29) disposed radially inward of the body (41) in a non-rotatable manner, the wire guide (29) configured to receive a filler wire (4) to pass through; an electrode (43) disposed at a distal end of the body (41), the electrode (43) integrally rotatable with the body (41), the electrode (43) extending toward the filler wire (4); and a power supply brush (55) disposed in the case (47).

## Description

### BACKGROUND

### 1. Technical Field

The present invention relates to a rotary torch.

### 2. Description of the Background

A conventional rotary torch includes a torch body, a wire guide, a rotary cylinder, and a non-consumable electrode (Japanese Patent No. 6963699; hereinafter, Patent Literature 1). The wire guide supplies a filler wire. The rotary cylinder, which surrounds the wire guide, is rotatably supported by the torch body. The non-consumable electrode is disposed at a distal end portion of the rotary cylinder.

### BRIEF SUMMARY

The rotary torch of Patent Literature 1 has a complicated mechanical structure and is difficult to maintain a power supply portion.

An object of the present invention is to provide a rotary torch having a simple structure and easy maintenance.

A first aspect of the present invention provides a rotary torch, including:
a hollow cylindrical case;
a hollow cylindrical body rotatably supported by the case in a radially inward of the case;
a hollow cylindrical wire guide disposed radially inward of the body in a non-rotatable manner, the wire guide configured to receive a filler wire to pass through;
an electrode disposed at a distal end of the body, the electrode integrally rotatable with the body, the electrode extending toward the filler wire; and
a power supply brush disposed in the case.

The rotary torch may include a power supply brush and a power source that supplies a welding current to the electrodes via the body.

The moving body is, for example, a vertical articulated robot, a horizontal articulated robot, a parallel link robot, or a vertical axis robot. The mounting surface (first mounting surface) may be disposed at a distal end portion of the moving body. The output shaft (first output shaft) is disposed on the mounting surface (first mounting surface). The moving body can move the rotary torch in a lateral direction, a vertical direction, and a front-rear direction. The moving body may change an inclination of the rotary torch with respect to the lateral direction, the vertical direction, and the front-rear direction.

Preferably, the guide hole guides the power supply brush in a non-rotatable manner.
The power source may be connected to the power supply brush.

The elastic body may be guided by the guide hole.

The body may be coaxially connected to the output shaft (first output shaft) of the moving body. The gear box may include an idler gear that meshes with the driven gear and the driving gear, respectively. The gear box may include an output shaft (second output shaft). The output shaft (second output shaft) is fastened to the driven gear. The output shaft (second output shaft) and the driven gear may be rotatably supported by a fixed shaft.

The housing (case), which is a hollow columnar housing having a side surface, may have a feed hole (guide hole) extending perpendicularly to the central axis and passing through the side surface.

The body may be disposed within the housing about the central axis in a rotatable manner. The body may be hollow and have an electrode at the distal end.

A wire holder may be disposed within the body to provide a welding wire.

The brush may be disposed in the feed hole, abut against the outer surface of the body, and supply power to the electrode through the body.

The case (housing) may include a plurality of feed holes. For example, the plurality of feed holes are arranged in a rotationally symmetrical manner about the central axis.

The brush is formed of a material having high conductivity and high thermal conductivity. The brush is, for example, a carbon brush. The brush may be guided by the feed hole.

A cooling channel extends in a meandering manner in a cooling body. The cooling body may be plate shaped. Preferably, a surface of the cooling body comes into close contact with a rear surface of the brush as seen from the central axis. A coolant is, for example, water. The coolant receives heat from the cooling body.

The housing may support a motor or a conveying device. The conveying device is, for example, a toothed pully and a toothed belt. The motor rotates the body via the conveying device.

The body may include a power supply portion. The power supply portion, which is cylindrical, comes into contact with the brush.

The body is supported by the housing via a first bearing at a basal end of the feed hole. The body is supported by the housing via a second bearing at a distal end of the feed hole or the power supply portion. A first seal may be disposed between the first bearing and the feed hole or the power supply portion. The first seal seals a gap between the body and the housing. A second seal may be disposed between the second bearing and the feed hole or the power supply portion. The body may include a sealing portion. The sealing portion comes into contact with the second seal. The sealing portion is disposed between the brush and the second bearing.

An insulating portion may be disposed between the body and the conveying device. The insulating portion electrically insulates the body from the conveying device. The insulating portion may be disposed between the first seal and the body. The insulating portion is disposed closer to the basal end from the brush or the power supply portion.

A support shaft may be disposed between the insulating portion and the conveying device. The support shaft may include a sealing flange. The sealing flange comes into contact with the first seal.

The rotary torch may include an inner nozzle. The inner nozzle may be formed from a material having electrical insulation. The inner nozzle surrounds a distal end portion of the wire holder. The inner nozzle ejects a shielding gas around the wire holder and the welding wire. The inner nozzle may insulate the wire holder from the body. The rotary torch may include an insulating cover. The insulating cover insulates an outer peripheral surface of the wire holder from the body.

According to the present invention, a rotary torch having a simple structure and easy maintenance can be provided.

### BRIEF DESCRIPTION OF DRAWINGS

FIG. 1 is a longitudinal sectional view of a rotary torch according to a first embodiment.
FIG.2 is a cross-sectional view taken along line II-II in FIG. 1.
FIG.3 is a cross-sectional view taken along line III-III in FIG. 2.
FIG. 4 is a longitudinal sectional view of a rotary torch according to a second embodiment.
FIG. 5 is a longitudinal cross-sectional view of a rotary torch according to a third embodiment.
FIG. 6 is a cross-sectional view taken along line VI-VI in FIG. 5.
FIG. 7 is a cross-sectional view taken along line VII-VII in FIG. 6.

### DETAILED DESCRIPTION

### First Embodiment

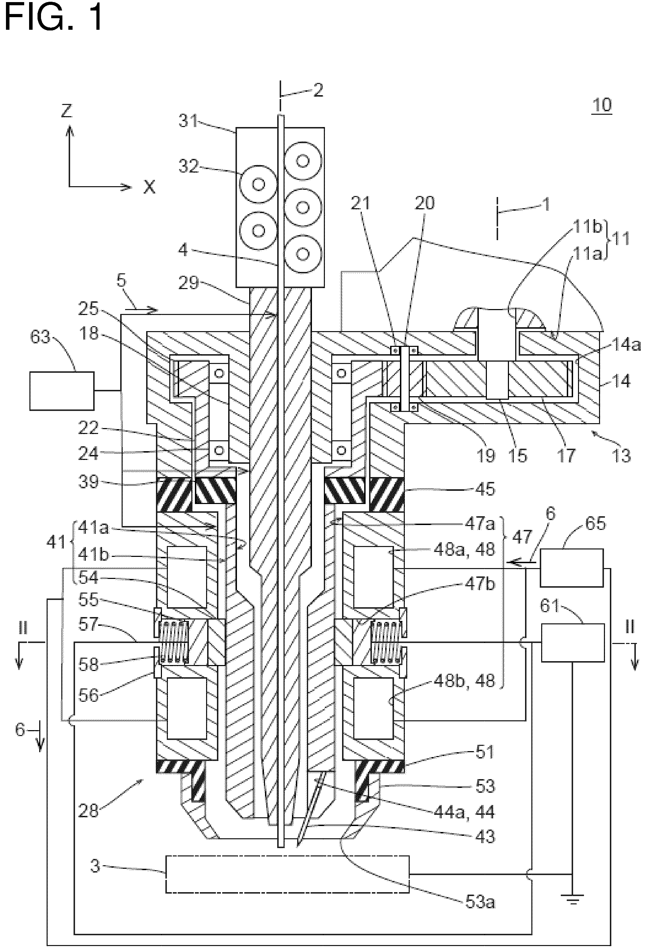

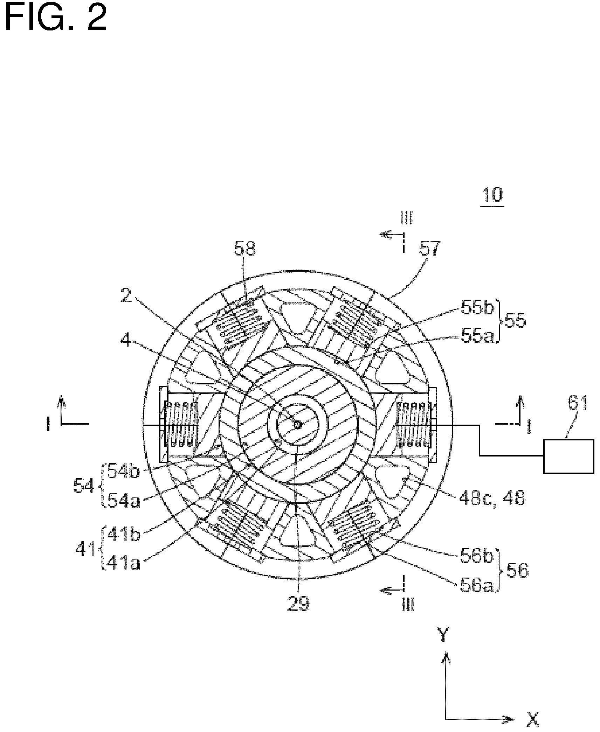

As shown in FIG. 1, a rotary torch 10 according to the present embodiment includes a gear box 13 and a torch head 28. The rotary torch 10 may include a power source 61, a gas source 63, a cooling device 65, and a power supply wire 57. The rotary torch 10 is arranged on a robot (moving body) 11. FIG. 1 is a cross-sectional view taken along line I-I in FIG. 2. A filler wire 4, a shielding gas 5 and a coolant 6 are supplied to the rotary torch 10.

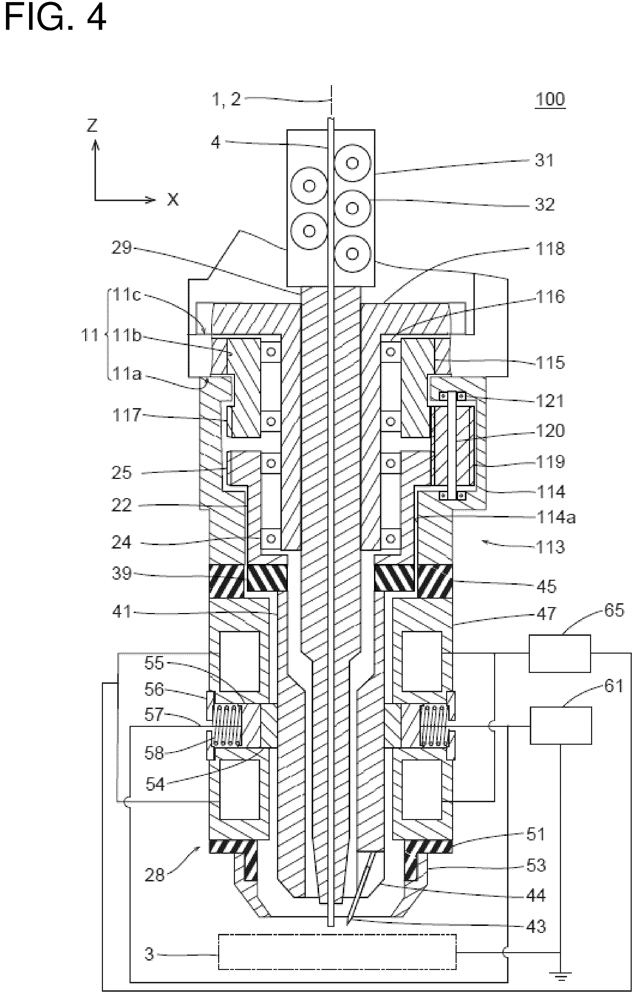

The robot 11 is a six-axis vertical articulated robot. The robot 11 includes a first mounting surface 11a, an output shaft (first output shaft) 11b, and a second mounting surface 11c (see FIG. 4). A side closer to a base (not shown) of the robot 11 is referred to as a basal end direction (upward direction in FIG. 1). The direction opposite to the basal end direction is referred to as a distal end direction (downward direction in FIG. 1). The output shaft 11b is a sixth arm of the robot 11. The output shaft 11b, which is a hollow shaft, has a central axis 1. The first mounting surface 11a is disposed on a distal end surface of the fifth arm. The second mounting surface 11c is disposed at a basal end of the fifth arm.

The gear box 13 includes a gear case 14, an input shaft 15, a driving gear 17, a fixed shaft 18, bearings 21 and 24, an idler shaft 20, an idler gear 19, a driven gear 25, and an output shaft (second output shaft) 22.

The gear case 14 is disposed on the first mounting surface 11a. The gear case 14 has a box shape. The gear case 14 includes a gear chamber 14a therein. The input shaft 15 is a solid shaft. The input shaft 15, which is fastened to the output shaft 11b, protrudes into the gear chamber 14a. The driving gear 17 is fastened to the input shaft 15.

The idler gear 19 is fastened to the idler shaft 20. The idler gear 19 is supported by the gear chamber 14a via the bearing 21. The idler gear 19 meshes with the driving gear 17.

The fixed shaft 18 is a hollow shaft. The fixed shaft 18 is arranged along a torch rotation axis 2. The torch rotation axis 2 is parallel to the central axis 1. The output shaft 22 is fastened to the driven gear 25. The output shaft 22 and the driven gear 25 may be integrated. The output shaft 22 and the driven gear 25 are supported on an outer peripheral surface of the fixed shaft 18 via the bearing 24. The driven gear 25 meshes with the idler gear 19.

The torch head 28 includes a wire guide 29, a roller bracket 31, rollers 32, a body insulator 39, a body 41, an electrode bracket 44, an electrode 43, a first case insulator 45, a case 47, a second case insulator 51, a nozzle 53, a brush (power supply brush) 55, a brush cover 56, and a spring (elastic body) 58.

The wire guide 29, which has a hollow cylindrical shape, is disposed about the torch rotation axis 2. The wire guide 29 is disposed radially inward of the fixed shaft 18. The wire guide 29 extends through the gear box 13 to the distal end of the rotary torch 10. Preferably, a distal end of the wire guide 29 is narrower than a central portion. The wire guide 29 supplies the filler wire 4 to the distal end of the rotary torch 10.

The roller bracket 31 is disposed at a basal end portion of the wire guide 29. The roller bracket 31 rotatably supports the rollers 32. The rollers 32 are arranged side by side on both sides of the torch rotation axis 2. The rollers 32 extend the filler wire 4 and guide it into the wire guide 29.

The body 41 and the body insulator 39 each has a hollow cylindrical shape. The body 41 and the body insulator 39 are disposed radially outward of the wire guide 29 about the torch rotation axis 2. The body 41 and the body insulator 39 rotate integrally with the output shaft 22.

The body insulator 39 is disposed at the distal end of the output shaft 22. The inner surface of the body insulator 39 is spaced apart from the outer surface of the wire guide 29. The body insulator 39 is non-conductive such as plastic. The body insulator 39 insulates the body 41 from the gear case 14.

The body 41 is disposed at the distal end of the body insulator 39. The body 41 includes an inner surface 41a, an outer surface 41b, and a power distribution ring 54. The inner surface 41a is spaced apart from the outer surface of the wire guide 29. Preferably, the body 41 has high conductivity and high thermal conductivity. The body 41 is formed of, for example, aluminum, an aluminum alloy, or a copper alloy.

The power distribution ring 54 is a hollow cylinder. The power distribution ring 54 includes an inner surface 54a (see FIG. 2) and an outer surface 54b (see FIG. 2). The power distribution ring 54 is removably disposed radially outward of the body 41. The power distribution ring 54 is disposed radially inward of the case 47. The inner surface 54a abuts the outer surface 41b. The power distribution ring 54 has high conductivity. The power distribution ring 54 is, for example, copper. The power distribution ring 54 and the body 41 rotate integrally around the torch rotation axis 2. The power distribution ring 54 may be omitted.

The electrode bracket 44 is detachably disposed at the distal end of the body 41. The electrode bracket 44 includes an electrode guide 44a. The electrode guide 44a is, for example, a hole or a slot. The electrode guide 44a tilts relative to the torch rotation axis 2 so as to move away from the torch rotation axis 2 toward the basal end.

The electrode 43 is fastened to the electrode guide 44a. The electrode 43 is formed of a metal having a high melting point. The electrode 43 is, for example, tungsten. The electrode 43 is movable along the electrode guide 44a. Preferably, the distal end of the electrode 43 is pointed in a needle shape. The electrode 43 is disposed in the vicinity of the filler wire 4.

The first case insulator 45, the case 47, the second case insulator 51, and the nozzle 53 are arranged in this order from the basal end. The first case insulator 45, the case 47, the second case insulator 51, and the nozzle 53 each has a hollow cylindrical shape and is disposed around the torch rotation axis 2.

The first case insulator 45 is disposed at a distal end portion of the gear case 14. The first case insulator 45 is disposed on the radially outer side of the body insulator 39 with a gap therebetween with respect to the outer surface of the body insulator 39. The first case insulator 45 is non-conductive such as plastic. The first case insulator 45 insulates between the case 47 and the gear case 14.

The case 47 includes an inner surface 47a, a guide hole 47b, and a cooling channel 48.

The case 47, which has a hollow cylindrical shape, extends around the torch rotation axis 2. A gap is provided between the inner surface 47a and the body 41. The case 47 has a high thermal conductivity. The case 47 is formed of, for example, aluminum, an aluminum alloy, or a copper alloy.

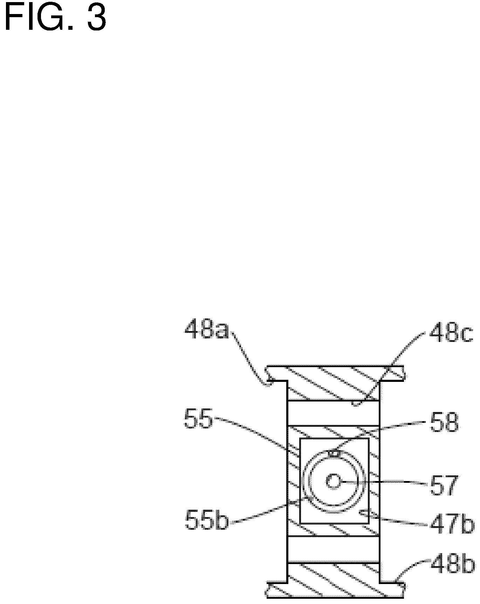

As shown in FIGs. 1 and 2, the guide hole 47b extends radially from the torch rotation axis 2. As shown in FIG. 3, the guide hole 47b has a rectangular cross-section. Preferably, the case 47 includes a plurality (six in the present embodiment) of guide holes 47b. The plurality of guide holes 47b are arranged rotationally symmetrically about the torch rotation axis 2.

The cooling channel 48 includes a first cooling channel 48a, a second cooling channel 48b, and a third cooling channel 48c (see FIG. 2). The third cooling channel 48c may be omitted.

The first cooling channel 48a is annular about the torch rotation axis 2. As shown in FIG. 1, the cross section of the first cooling channel 48a is, for example, rectangular. The corners of the cross section of the first cooling channel 48a may be rounded. The first cooling channel 48a is disposed at a basal end of the guide hole 47b. Preferably, the first cooling channel 48a and the guide hole 47b are disposed close to each other.

The second cooling channel 48b is disposed at a distal end of the guide hole 47b. The other configuration of the second cooling channel 48b is substantially the same as the first cooling channel 48a.

The third cooling channel 48c connects the first cooling channel 48a and the second cooling channel 48b. Preferably, the cooling channel 48 includes a plurality (six in the present embodiment) of third cooling channels 48c. As shown in FIG. 2, the third cooling channel 48c is disposed between the guide holes 47b in the circumferential direction around the torch rotation axis 2. Preferably, the guide hole 47b and the third cooling channel 48c are arranged alternately on the circumference. Preferably, the third cooling channel 48c and the guide hole 47b are disposed close to each other. As shown in FIG. 2, the cross section of the third cooling channel 48c is, for example, a sector shape.

As shown in FIGs. 2 and 3, the brush 55 has a prismatic shape. The brush 55 is disposed inside the guide hole 47b. The brush 55 slides on the inner surface of the guide hole 47b. The brush 55 is not rotatable. The brush 55 includes a sliding contact surface 55a and a spring guide 55b. The sliding contact surface 55a is a radially inner end surface (distal end surface) of the brush 55. The sliding contact surface 55a is a right cylindrical surface centered on the torch rotation axis 2. When the body 41 rotates, the sliding contact surface 55a slidably contacts the outer surface 54b. The spring guide 55b is located at the radially outer end (basal end) of the brush 55. The spring guide 55b is a cylindrical hole. The spring guide 55b may be an annular groove or a cylindrical shaft. The spring guide 55b guides the spring 58. The power supply wire 57 is connected to the basal end portion of each brush 55.

The brush cover 56 has a rectangular plate shape. As shown in FIG. 2, the brush cover 56 closes an outer opening of the guide hole 47b. The brush cover 56 includes a feed hole 56a and a spring guide 56b. The feed hole 56a extends radially through the brush cover 56. The power supply wire 57 passes through the feed hole 56a. The spring guide 56b is arranged radially inward of the brush cover 56 with respect to the torch rotation axis 2. The spring guide 56b, which is a cylindrical bottomed hole, extends along the torch rotation axis 2. The spring guide 56b guides the spring 58.

The spring 58 is a compression coil spring. The spring 58 is disposed between the brush 55 and the brush cover 56. The spring 58 is guided by the spring guide 56b and the spring guide 55b. The spring 58 urges the brush 55 toward the body 41.

As shown in FIG. 1, the second case insulator 51 is disposed at the distal end of the case 47. The second case insulator 51 has an L-shaped cross section. The second case insulator 51 is disposed radially outward of the body 41 with a gap from the outer surface 41b. The second case insulator 51 is non-conductive such as plastic. The second case insulator 51 insulates the nozzle 53 from the case 47.

The nozzle 53 is disposed at the distal end of the second case insulator 51. The nozzle 53 includes an ejection port 53a. The nozzle 53 covers the outer circumference of the wire guide 29, the body 41, and the electrode 43.

The power source 61 is connected to the power supply wire 57. The power source 61 applies a voltage between the workpiece 3 and the brush 55.

The cooling device 65 supplies the coolant 6 to a first end of the cooling channel 48. The cooling device 65 recovers the coolant 6 from a second end of the cooling channel 48. The cooling device 65 cools the recovered coolant 6.

The gas source 63 supplies the shielding gas 5 to the rotary torch 10. For example, the gas source 63 supplies the shielding gas 5 to the wire guide 29, the gap between the body 41 and the wire guide 29, and the gap between the body 41 and the case 47. The shielding gas 5 is ejected from the inner end of the body 41 or from the ejection port 53a. This protects the molten metal or the electrode 43 from oxygen and nitrogen in the air.

According to the rotary torch 10 of the present embodiment, the brush 55 is urged against the body 41 by the spring 58. As a result, even if the brush 55 is worn, the brush 55 and the power distribution ring 54 come into contact with each other. Further, when the operator removes the brush cover 56, the brush 55 is taken out from the guide hole 47b and is assembled via the guide hole 47b. This allows the operator to easily replace the brush 55.

According to the present embodiment, the cooling channel 48 is embedded in the case 47. This simplifies the structure of the rotary torch 10. The cooling channel 48 surrounds the brush 55. The cooling device 65 circulates the coolant 6 inside the cooling channel 48. This cools the electrode 43 through the case 47, the brush 55, and the body 41. The first cooling channel 48a is disposed at the basal end of the brush 55. This suppresses heat transfer of the molten metal to the robot 11.

The body 41 can be rotated by the sixth arm, which is the distal end shaft of the robot 11. In the present embodiment, no other power (e.g., a motor) is required to rotate the body 41. This simplifies the structure of the rotary torch 10. Further, the weight of the rotary torch 10 as an end effector can be reduced. This reduces the transportable weight of the robot 11. Then, the number of drive axes of the robot 11 can be effectively utilized.

### Second Embodiment

As shown in FIG. 4, a rotary torch 100 according to the present embodiment includes a gear box 113 and a torch head 28. The torch rotation axis 2 of the torch head 28 and the central axis 1 are coaxial.

The gear box 113 includes a gear case 114, an input shaft 115, a driving gear 117, an idler shaft 120, bearings 116, 121, and 24, an idler gear 119, a fixed shaft 118, a driven gear 25, and an output shaft 22.

The gear case 114 is disposed on the first mounting surface 11a. The gear case 114 extends along the torch rotation axis 2. The gear case 114 has a box shape. The gear case 114 has a gear chamber 114a. The input shaft 115 has a hollow cylindrical shape. The input shaft 115, which is disposed coaxially with the output shaft 11b, is fastened to the output shaft 11b.

The driving gear 117 is fastened to the distal end of the input shaft 115. The driving gear 117 is disposed coaxially with the torch rotation axis 2. The fixed shaft 118 has a hollow cylindrical shape. The fixed shaft 118 is fixed to the second mounting surface 11c. The fixed shaft 118 extends along the torch rotation axis 2. The input shaft 115 and the driving gear 117 are supported by a basal end portion of the fixed shaft 118 via the bearing 116. The driven gear 25 and the output shaft 22 are supported by the distal end portion of the fixed shaft 118 via the bearing 24.

The idler shaft 120 extends parallel to the torch rotation axis 2. The idler shaft 120 is disposed on the lateral side of the torch rotation axis 2. The idler shaft 120 is supported by the gear case 114 via the bearing 121. The idler gear 119 is supported by the idler shaft 120. The basal end of the idler gear 119 meshes with the driving gear 117. The distal end portion of the idler gear 119 meshes with the driven gear 25. A plurality of the idler gears 119 and a plurality of the idler shafts 120 may be disposed.

The wire guide 29 is disposed radially inward of the fixed shaft 118. The first case insulator 45 is disposed at a distal end portion of the gear case 114. The other structure of the rotary torch 100 is substantially the same as the rotary torch 10 of the first embodiment.

According to the rotary torch 100 of the present embodiment, as the torch rotation axis 2 and the central axis 1 are coaxial, it is easy to control the distal end trajectory of the robot 11.

### Third Embodiment

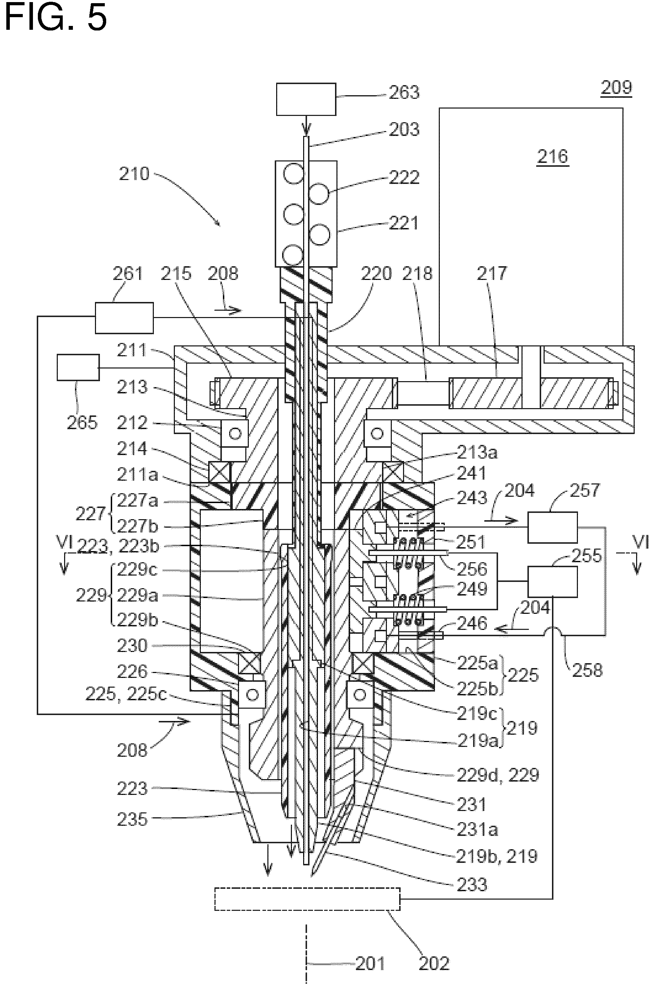

As shown in FIG. 5, a welding machine 209 according to the present embodiment includes a rotary torch 210, a welding power source 255, a chiller (cooling device) 257, a gas source 261, a wire supply device 263, and a moving device 265. The welding machine 209 welds to a workpiece 202. Hereinafter, a downward direction of FIG. 5 is referred to as a distal end. An upward direction of FIG. 5 is referred to as a basal end.

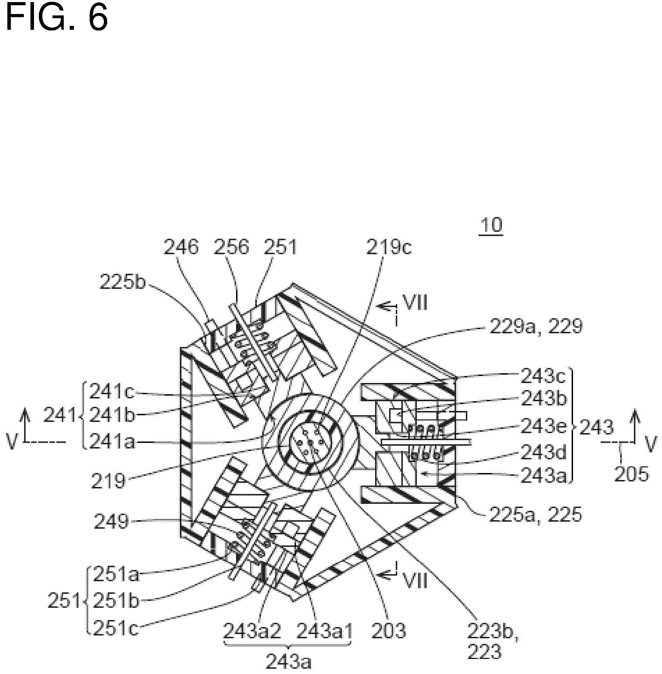

As shown in FIGs. 5 and 6, the rotary torch 210 includes a pulley case 211, a motor 216, a bearing 212, a support shaft 213, a seal 214, a driven pulley 215, a driving pulley 217, an endless belt 218, a wire holder 219, an insulating cover 220, a roller bracket 221, a roller 222, an inner nozzle 223, a housing 225, a bearing 226, an insulating portion 227, a body 229, a seal 230, an electrode holder 231, an outer nozzle 235, an electrode 233, and a plurality (six in the present embodiment) of brushes 241, a plurality (three in the present embodiment) of coolers 243, a spring (elastic body) 249, a fitting 246, and a plurality (three in the present embodiment) of covers 251. FIG. 5 is a cross-sectional view taken along line V-V in FIG. 6.

The support shaft 213, the driven pulley 215, the insulating portion 227, the body 229, the electrode holder 231, and the electrode 233 rotate about the central axis 201. The pulley case 211, the seal 214, the wire holder 219, the inner nozzle 223, the housing 225, the seal 230, the outer nozzle 235, the brush 241, the cooler 243, the spring (elastic body) 249, the fitting 246, and the cover 251 do not rotate.

The pulley case 211 has a hollow box shape. The pulley case 211 has a circular opening 211a at its distal end. The motor 216 is disposed on the pulley case 211.

The support shaft 213 extends about the central axis 201. The support shaft 213 is supported by the pulley case 211 via the bearing 212. The support shaft 213 is hollow. The support shaft 213 includes a sealing flange 213a. The sealing flange 213a is disposed at a distal end portion of the support shaft 213. The sealing flange 213a has a larger diameter than a central portion of the support shaft 213.

The driven pulley 215 is fastened to the basal end portion of the support shaft 213. The driven pulley 215 may be integral with the support shaft 213. The driving pulley 217, which is disposed inside the pulley case 211, is connected to the motor 216. The driven pulley 215 and the driving pulley 217 are toothed pulleys. The endless belt 218 is mounted across the driven pulley 215 and the driving pulley 217.

The seal 214 is arranged in the opening 211a. The seal 214 seals between the opening 211a and the sealing flange 213a.

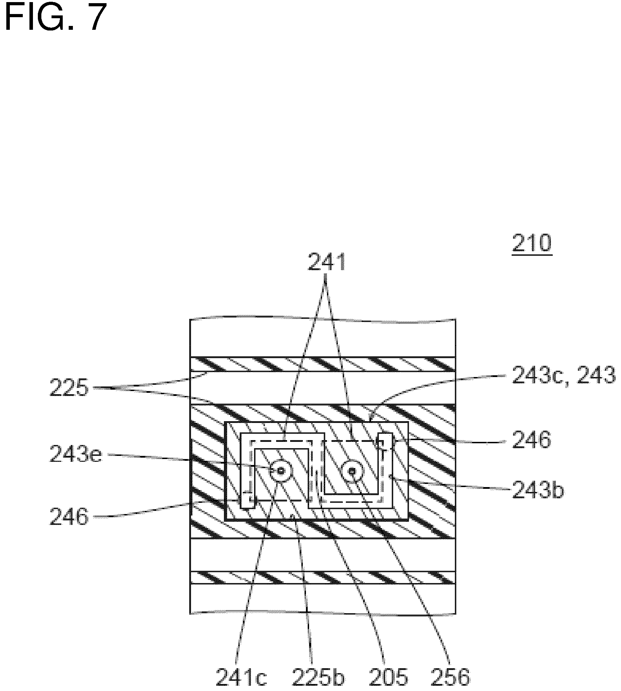

The housing 225 has a hollow hexagonal prism shape. The housing 225 extends along the central axis 201. The housing 225 is connected to the distal end of the pulley case 211. The housing 225 includes a side surface 225a, a feed hole (guide hole) 225b, and a nozzle bracket 225c. The side surface 225a is an outer peripheral surface of the pulley case 211. The feed hole 225b, which is disposed on the side surface 225a, extends radially. As shown in FIG. 7, the feed hole 225b has a rectangular cross-section. The central axis of the feed hole 225b is referred to as a feed axis 205. The housing 225 has a plurality (three in the present embodiment) of feed holes 225b. The plurality of feed holes 225b are arranged rotationally symmetrically about the central axis 201 (three-fold symmetry in the present embodiment). The feed hole 225b guides the cooler 243 radially.

As shown in FIG. 5, the nozzle bracket 225c, which extends along the central axis 201, is disposed at the distal end of the housing 225. The nozzle bracket 225c is thin-walled cylindrical.

The housing 225 is made of an insulator. Preferably, the housing 225 has higher thermal insulation than metal. The housing 225 is made of plastic, for example.

The bearing 226 is disposed on an inner surface of the distal end portion of the housing 225.

The insulating portion 227 includes a flange portion 227a and a body portion 227b. The insulating portion 227 is hollow. The flange portion 227a is connected to the support shaft 213. The flange portion 227a has substantially the same outer diameter as the sealing flange 213a. The body portion 227b is disposed at a distal end of the flange portion 227a. The body portion 227b has substantially the same inner and outer diameters as the body 229. The insulating portion 227 is made of an insulator. Preferably, the insulating portion 227 has a heat insulating property higher than that of the metal. The insulating portion 227 is made of plastic, for example.

The body 229, which is hollow cylindrical, extends along the central axis 201. The body 229 includes a power supply portion 229a, a sealing portion 229b, an anti-vibration portion 229c, and an electrode mounting portion 229d.

The power supply portion 229a is disposed from the center portion to the basal end portion of the body 229. The power supply portion 229a is a right cylinder centered on the central axis 201. The power supply portion 229a is connected to the body portion 227b.

The sealing portion 229b is disposed between the power supply portion 229a and the bearing 226. The sealing portion 229b is a right cylinder having an outer diameter slightly larger than the power supply portion 229a.

The anti-vibration portion 229c is disposed on the inner surface of the body 229. The anti-vibration portion 229c is disposed at a basal end portion or a central portion of the body 229.

The electrode mounting portion 229d is disposed at a distal end portion of the body 229. The electrode mounting portion 229d is a radially extending groove.

The body 229 is supported by the housing 225 via the bearing 226. Preferably, the body 229 is supported at a distal end. The sealing portion 229b is disposed toward basal end than the bearing 226.

The support shaft 213, the insulating portion 227, and the body 229 are integrally supported at their basal ends by the bearing 212, and supported at their distal ends by the bearing 226.

The seal 230 seals the gap between the housing 225 and the sealing portion 229b.

The electrode holder 231 has a plate shape. The electrode holder 231 is a metal having high conductivity. The electrode holder 231 has high electrothermal properties. For example, the electrode holder 231 is made of pure copper or a copper alloy. The electrode holder 231 is fastened to the electrode mounting portion 229d with bolt. The electrode holder 231 is removable from the body 229. The electrode holder 231 has an electrode mounting hole 231a. The electrode mounting hole 231a is a round hole, and the electrode 233 is mounted to the electrode mounting hole 231a. The electrode 233 is, for example, a tungsten electrode. The electrode 233 is inclined so that a distal end portion thereof is directed radially inward.

The insulating cover 220, which is hollow cylindrical, extends along the central axis 201. The insulating cover 220 is disposed radially outward of the wire holder 219. The basal end portion of the insulating cover 220 is supported by the pulley case 211. The insulating cover 220 insulates the outer periphery of the wire holder 219 from the basal end portion to the center portion. The insulating cover 220 is made of an insulator. For example, the insulating cover 220 is made of insulating plastic.

The wire holder 219 includes a wire insertion hole 219a, a distal end portion 219b, and a plurality (six in the present embodiment) of gas channels 219c. The wire holder 219 is supported by the insulating cover 220. The gas channel 219c extends parallel to the central axis 201. The gas channel 19c is connected to the gas source 261 at the basal end portion of the wire holder 219. The gas channel 219c is connected to the inner nozzle 223. The plurality of gas channels 219c are arranged rotationally symmetrically about the central axis 201.

The roller bracket 221 is disposed at the basal end of the insulating cover 220. The rollers 222 are rotatably disposed on the roller bracket 221.

The inner nozzle 223 includes a bulging portion 223b. The inner nozzle 223 has a thin cylindrical shape. The inner nozzle 223 is supported from a central portion to a distal end portion of the insulating cover 220 around the central axis 201. The inner nozzle 223 surrounds the distal end portion 219b. The inner nozzle 223 is made of an insulator. For example, the inner nozzle 223 is an insulating plastic or ceramics. The inner nozzle 223 insulates the outer periphery of the wire holder 219 from the center portion to the distal end portion. The bulging portion 223b is disposed with a slight gap in the anti-vibration portion 229c.

The outer nozzle 235 is mounted to the nozzle bracket 225c about the central axis 201. The outer nozzle 235 is connected to the gas source 261.

A pair of brushes 241 are disposed along the central axis 201. A pair of brushes 241 are arranged in each of the three feed holes 225b. As shown in FIG. 6, the brush 241 includes a cylindrical surface 241a, a rear surface 241b, and a connecting portion 241c. As indicated by the broken line in FIG. 7, the brush 241 has a quadrangular prism shape when viewed from the side (right side in FIG. 5).

The cylindrical surface 241a has the same diameter as that of the power supply portion 229a. The rear surface 241b is disposed on the back surface of the brush 241 when viewed from the central axis 201. The rear surface 241b is perpendicular to the feed axis 205. The connecting portion 241c is a right cylinder extending parallel to the feed axis 205. The connecting portion 241c is located at the center of the rear surface 241b. The connecting portion 241c is connected to a power supply cable 256.

The coolers 243 are arranged in the respective feed holes 225b. A single cooler 243 is fastened to the set of brushes 241. As shown in FIGs. 6 and 7, the cooler 243 has a rectangular plate shape. The cooler 243 is made of a highly conductive metal. The cooler 243 is, for example, aluminum or copper. The cooler 243 includes a cooling plate (cooling body) 243a, a cooling channel 243b, a side surface 243c, a spring guide hole 243d, and a through hole 243e.

The cooling plate 243a includes a first plate 243a1 and a second plate 243a2. The first plate 243a1 and the second plate 243a2 are perpendicular to the feed axis 205. The first plate 243a1 and the second plate 243a2 are closely coupled to each other. The first plate 243a1 is in close contact with the rear surface 241b.

The cooling channel 243b is disposed between the first plate 243a1 and the second plate 243a2. For example, the cooling channel 243b is disposed on the first plate 243a1. The cooling channel 243b, which has a rectangular cross-section, is S-shaped. The side surface 243c is a peripheral surface of the cooler 243. The side surface 243c is guided to the feed hole 225b. The side surface 243c may be in sliding contact with the feed hole 225b. The through hole 243e, which extends parallel to the feed axis 205, passes through the cooler 243. The through hole 243e, which is coaxial with the connecting portion 241c, has the same diameter as the connecting portion 241c. The connecting portion 241c may abut the through hole 243e. The power supply cable 256 passes through the through hole 243e. The spring guide hole 243d is arranged on the back side of the second plate 243a2 when viewed from the central axis 201. The spring guide hole 243d is coaxial with the through hole 243e.

The fittings 246 are disposed at both ends of the cooling channel 243b. The fitting 246 is connected to the cooling channel 243b and the chiller 257. The fitting 246 extends parallel to the feed axis 205.

As shown in FIG. 6, the cover 251 includes a spring guide hole 251a, a cable hole 251b, and a fitting hole 251c. The cover 251, which is a rectangular plate, blocks the opening of the feed hole 225b. The spring guide hole 251a is disposed radially inward of the cover 251. The cable hole 251b and the spring guide hole 251a extend coaxially with the connecting portion 241c. The spring guide hole 251a has the same diameter as the spring guide hole 243d. The spring guide hole 251a faces the spring guide hole 243d. The cable hole 251b is a through hole. The power supply cable 256 passes through the cable hole 251b. The fitting hole 251c is a through hole. The fitting 246 passes through the fitting hole 251c.

The spring 249 is a compression coil spring. The spring 249 is disposed between the spring guide hole 251a and the spring guide hole 243d. The spring 249 urges the brush 241 to the body 229 via the cooler 243.

A first output terminal of the welding power source 255 is connected to the brush 241 via the power supply cable 256. A second output terminal of the welding power source 255 is connected to a workpiece 202. The workpiece 202 is grounded. The welding power source 255 controls the chiller 257, the gas source 261, and the wire supply device 263.

The gas source 261 includes a gas cylinder and a flow rate regulator. The gas source 261 supplies a shielding gas 208 to the wire holder 219 and the outer nozzle 235. The shielding gas 208 is ejected from the inner nozzle 223 and the outer nozzle 235.

The chiller 257 is connected to the cooling channel 243b via the fitting 246. The chiller 257 circulates and supplies a coolant 204 to the cooler 243. The chiller 257 exchanges heat in the cooler 243 to cool the warmed coolant 204.

The wire supply device 263 supplies a welding wire (filler wire) 23 to the wire holder 219.

The moving device 265 is connected to the pulley case 211. The moving device 265 is, for example, a robot. The moving device 265 is, for example, an articulated robot, a parallel link robot, or an orthogonal axis robot. The articulated robot is, for example, a vertically articulated robot or a horizontally articulated robot.

According to the rotary torch 210 of the present embodiment, the cooler 243 and the brush 241 can be removed and replaced only by removing the cover 251. In addition, the brush 241 is urged by the spring 249 to the body 229 via the cooler 243. This stably supplies the welding current.

The electrode 233 is brought to an extremely high temperature by the arcing and the radiant heat from the molten pool formed in the workpiece 202. Thus, it is necessary to cool the electrode 233. The cooler 243 is directly connected to the brush 241. The rear surface 241b thus comes into close contact with the cooler 243. The cylindrical surface 241a is in sliding contact with the power supply portion 2229a while being urged. The brush 241 is urged toward the body 229. The electrode holder 231, the body 229, the brush 241, and the cooler 243 have high conductivity. The cooling channel 243b extends in a meandering manner in the cooler 243. This increases the surface area of the cooling channel 243b. The heat of the electrode 233 is thus effectively exhausted to the coolant 204 via the body 229, the brush 241, and the cooler 243. In addition, the positions of the brush 241 and the electrode 233 can be closer to each other as compared with the conventional art. The cooler 243 supplies cold heat through the brush 241. Bringing the cooler 243 and the electrode 233 closer to each other effectively cools the electrode 233.

The body 229 is connected to the support shaft 213 via the insulating portion 227. The body 229, the brush 241, the spring 249, the cooler 243, and the fitting 246 are supported by the housing 225. The insulating portion 227 and the housing 225 have high insulating properties. This prevents the welding current from flowing to the moving device 265 and the motor 216 through the pulley case 211.

The outer periphery of the wire holder 219 is insulated from the body 229, the support shaft 213, and the pulley case 211 by the insulating cover 220 and the inner nozzle 223. This prevents the welding current from flowing to the pulley case 211 through the wire holder 219.

The workpiece 202 and the roller bracket 221 are grounded.

The support shaft 213, the insulating portion 227, and the body 229 are fastened to each other and rotate integrally. Both end portions of the support shaft 213, the insulating portion 227, and the body 229 are supported by the bearing 212 and the bearing 226. This suppresses the shake of the support shaft 213, the insulating portion 227, and the body 229.

The inner nozzle 223 includes the bulging portion 223b. The bulging portion 223b is disposed with a slight gap in the anti-vibration portion 229c. The inner nozzle 223 supports a distal end portion of the wire holder 219. The basal end portion of the wire holder 219 is supported by the pulley case 211 via the insulating cover 220. This suppresses the shake of the wire holder 219.

The body 229 is supplied with power from the brush 241 in the power supply portion 229a. The brush 241 is connected to the cooler 243. The power supply portion 229a is supported by the bearing 212 and the bearing 226 with the seal 214 and the seal 230 in between. The seal 214 and the seal 230 prevent the abrasion powder of the brush 241 from falling onto the workpiece 202. Further, even when the coolant 204 leaks from the cooler 243, the seal 214 and the seal 230 prevent the coolant 204 from contacting the bearings 212 and 226. The seal 214 and the seal 2230 prevent the abrasion powder of the brush 241 and the coolant 204 from flowing out to the electrode 233, the distal end portion of the welding wire 203, and the periphery of the workpiece 202.

The present invention is not limited to the above-described embodiments, and various modifications can be made without departing from the gist of the present invention, and all technical matters included in the technical idea described in the claims are the subject of the present invention. While the above embodiments have been shown by way of example, those skilled in the art will recognize that various alternatives, modifications, variations, and improvements can be made from the disclosure herein, which fall within the scope of the appended claims.

### Reference Signs List

4, 203 Filler wire (Welding wire)
10, 100, 200 Rotary torch
41, 225 Body
43, 233 Electrode
47, 225 Case (Housing)
55, 241 Brush (Power brush)

## Claims

1. A rotary torch (10, 100, 210), comprising:
a hollow cylindrical case (47, 225);
a hollow cylindrical body (41, 229) rotatably supported by the case (47, 225) in a radially inward of the case (47, 225);
a hollow cylindrical wire guide (29, 219) disposed radially inward of the body (41, 229) in a non-rotatable manner, the wire guide (29, 219) configured to receive a filler wire (4, 203) to pass through;
an electrode (43, 233) disposed at a distal end of the body (41, 229), the electrode (43, 233) integrally rotatable with the body (41, 229), the electrode (43, 233) extending toward the filler wire (4, 203); and
a power supply brush (55, 241) disposed in the case (47, 225).

2. The rotary torch (10, 100, 210) according to claim 1, wherein
the case (47, 225) includes a guide hole (47b, 225b) into which the power supply brush (55, 241) is mounted, the guide hole (47b, 225b) extending in a radial direction, and
the power supply brush (55, 241) is reciprocable in the guide hole (47b, 225b),
the rotary torch (10, 100, 210) further comprising:
an elastic body (58, 249) disposed in the guide hole (47b, 225b) to urge the power supply brush (55, 241) radially inward.

3. The rotary torch (10, 100) according to claim 2, wherein
the power supply brush (55, 241) includes, at a radially inner end, a sliding contact surface (55a, 241a) configured to slide contact with an outer cylindrical surface of the body (41, 229).

4. The rotary torch (10, 100) according to any one of claims 1 to 3, wherein
the body (41) includes a power distribution ring (54) configured to slide contact with the power supply brush (55).

5. The rotary torch (10, 100, 210) according to any one of claims 1 to 4, further comprising:
a plurality of the power supply brushes (55, 241) evenly arranged on a circumference of the body (41, 229).

6. The rotary torch (100) according to any one of claims 1 to 5, further comprising:
a cooler (243) disposed in contact with the brush (241) to exhaust heat of the electrode (233) via the brush (241).

7. The rotary torch (210) according to any one of claims 1 to 6, wherein
the cooler (243) includes
a cooling body (243a) in contact with the brush (241), and
a cooling channel (243b) disposed in the cooling body (243a) for coolant (204) to pass through.

8. The rotary torch (210) according to any one of claims 1 to 7, further comprising:
a spring (249) configured to integrally urge the brush (241) and the cooler (243) toward the body (229).

9. The rotary torch (210) according to any one of claims 1 to 8, wherein
the cooler (243) is disposed on a back surface of the brush (241) as viewed from a central axis (201).

10. The rotary torch (210) according to any one of claims 1 to 9, wherein
the cooling body (243a) is guided by the guide hole (225b).

11. The rotary torch (210) according to any one of claims 1 to 10, wherein
the case (225) is made of an insulator.
